(19)

Europäisches
Patentamt
European
Patent Office
Office européen
des brevets

(11)  EP 3 185 137 A1

(12)  **EUROPEAN PATENT APPLICATION**

(43) Date of publication:
28.06.2017  Bulletin 2017/26

(51) Int Cl.:
*G06F 17/30* (2006.01)

(21) Application number: 15307079.2

(22) Date of filing: 21.12.2015

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **FRADET, Matthieu
35576 Cesson-Sévigné (FR)**
• **MARQUANT, Gwenaëlle
35576 Cesson-Sévigné (FR)**
• **DEMARTY, Claire-Hélène
35576 Cesson-Sévigné (FR)**
• **HE, Chenzhi
35708 Rennes Cedex 7 (FR)**

(74) Representative: **Huchet, Anne et al
TECHNICOLOR
1-5, rue Jeanne d'Arc
92130 Issy-les-Moulineaux (FR)**

(54)  **METHOD, APPARATUS AND ARRANGEMENT FOR SUMMARIZING AND BROWSING VIDEO CONTENT**

(57)  A method, apparatus and arrangement for the summarizing and browsing of video sequences are provided and include at least one horizontal strip having timesequenced video frames belonging to a single video sequence and at least one vertical strip having a plurality of video frames belonging to different video sequences, each of the plurality of video frames of the at least one vertical strip having at least one feature in common. In one instance, the at least one horizontal strip and the at least one vertical strip are arranged to intersect at a video frame of the at least one horizontal video strip having the least one feature in common with the video frames in the at least one vertical strip.

FIG. 1

# EP 3 185 137 A1

**Description**

## TECHNICAL FIELD

The present principles relate generally to presenting video content and, more particularly, to summarizing and browsing video content.

## BACKGROUND

Many works try to represent a whole video sequence into a single static or animated image. Given the desired dimensions of the output image, the idea is to incorporate as many "interesting image regions" as possible within these fixed dimensions. In such solutions, "interesting image regions" are usually key-frames. Key-frames should be mutually distinct so that near duplicates are not selected. Such key-frames are usually selected either manually or by uniform subsampling in time, or automatically, for example, by using a shot and sub-shot detector. In the latter case, for each sub-shot the frame with the best quality and the maximum saliency is selected, or alternatively an objective function is minimized so that the selected key-frames (their number is supposed to be fixed) are optimal in that they are the ones among all the input frames that would enable the reconstruction of the complete sequence with a minimum cost.

Once the representative frames or regions have been selected for the summary, the next problem is to arrange them such that the output representation remains compact and coherent and allows efficient browsing. Previous solutions that address the browsing problem are really few.

## SUMMARY OF THE INVENTION

Embodiments of the present principles are directed at least in part to addressing the deficiencies of the prior art by providing a method, apparatus and arrangement for summarizing and browsing video content. Various embodiments of the present principles provide a new compact representation of an input video set that enables efficient temporal browsing inside a single input video and also browsing from one video to another based on an inter-videos relationship.

In one embodiment of the present principles, an arrangement for the presentation of a plurality of video sequences for viewing includes at least one horizontal strip having time-sequenced video frames belonging to a single video sequence and at least one vertical strip having a plurality of video frames belonging to different video sequences, each of the plurality of video frames of the at least one vertical strip having at least one feature in common. In such an embodiment the at least one horizontal strip and the at least one vertical strip are configured to intersect at a video frame of the at least one horizontal strip having the at least one feature in common with the video frames in the at least one vertical strip.

In an alternate embodiment of the present principles, a method for arranging video sequences for summarizing and browsing includes arranging video frames of a single video sequence in at least one strip having a first direction, the at least one strip arranged in the first direction having time-sequenced video frames, arranging video frames of different video sequences in at least one strip having a second direction, the frames of the at least one strip arranged in the second direction having at least one feature in common and configuring the video frames of the at least one strip arranged in the second direction to intersect the at least one strip arranged in the first direction at a video frame of the at least one strip arranged in the first direction having the least one feature in common with the video frames of the at least one strip arranged in the second direction.

In an alternate embodiment of the present principles an apparatus for arranging video sequences for summarizing and browsing includes a memory for storing at least control programs, instructions, software, video content, video sequences and data and a processor for executing the control programs and instructions. In such an embodiment, when executing the control programs the processor configures the apparatus to arrange video frames of a single video sequence in at least one strip having a first direction, the at least one strip arranged in the first direction having time-sequenced video frames, arrange video frames of different video sequences in at least one strip having a second direction, the frames of the at least one strip arranged in the second direction having at least one feature in common and configure the video frames of the at least one strip arranged in the second direction to intersect the at least one strip arranged in the first direction at a video frame of the at least one strip arranged in the first direction having the least one feature in common with the video frames of the at least one strip arranged in the second direction.

In alternate embodiment of the present principles a machine-readable medium having one or more executable instructions stored thereon, which when executed by a digital processing system causes the digital processing system to perform a method for arranging video sequences for summarizing and browsing, the method includes arranging video frames of a single video sequence in at least one strip having a first direction, the at least one strip arranged in the first direction having time-sequenced video frames, arranging video frames of different video sequences in at least one strip having a second direction, the frames of the at least one strip arranged in the second direction having at least one feature in common and configuring the video frames of the at least one strip arranged in the second direction to intersect the at least one strip arranged in the first direction at a video frame of the at least one strip arranged in the first direction having the least one feature in common with the video frames of the at least one strip arranged in the second direction.

## BRIEF DESCRIPTION OF THE DRAWINGS

The teachings of the present invention can be readily understood by considering the following detailed description in conjunction with the accompanying drawings, in which:

FIG. 1 depicts an exemplary representation of a collection of input video sequences arranged in crossed horizontal and vertical strips in accordance with an embodiment of the present principles;
FIG. 2 depicts an example of a temporal relationship between the two input videos of FIG. 1 in accordance with an embodiment of the present principles;
FIG. 3a depicts an example of the display of two horizontal strips and one vertical strip for summarizing and browsing video content in accordance with an embodiment of the present principles;
FIG. 3b depicts an example of the display of two vertical strips and one horizontal strip for summarizing and browsing video content in accordance with an alternate embodiment of the present principles;
FIG. 4a depicts an embodiment of the present principles in which a configuration for summarizing and browsing content includes a single horizontal strip and three vertical strips;
FIG. 4b depicts an embodiment of the present principles in which a configuration for summarizing and browsing content includes a single vertical strip and three horizontal strips;
FIG. 5 depicts an embodiment of the present principles in which a configuration for summarizing and browsing content includes a single vertical strip and two horizontal strips;
FIG. 6 depicts an example of a user interface in accordance with an embodiment of the present principles;
FIG. 7 depicts a flow diagram of a method for summarizing and browsing content in accordance with an embodiment of the present principles; and
FIG. 8 depicts a high level block diagram of an apparatus for implementing the features of the present principles in accordance with an embodiment of the present principles.

To facilitate understanding, identical reference numerals have been used, where possible, to designate identical elements that are common to the figures. The drawings are not to scale, and one or more features may be expanded or reduced for clarity.

## DETAILED DESCRIPTION

Embodiments of the present principles advantageously provide a method, an apparatus and an arrangement for summarizing and browsing video content. Although the present principles will be described primarily within the context of horizontal and vertical strips, the specific embodiments of the present principles should not be treated as limiting the scope of the invention. It will be appreciated by those skilled in the art and informed by the teachings of the present principles that the concepts of the present principles can be advantageously applied to video frames comprising strips oriented in substantially any direction.

The embodiments of the present principles leverage both width and height of a dedicated space of a presentation space/display screen. The interactive representation enables efficient intra and inter-video browsing while avoiding visual overload on a presentation space/display screen contrary to multi-track representation of, for example, existing video editors.

More specifically, various embodiments of the present principles provide a compact representation of a collection of input video sequences based on crossed horizontal and vertical strips. In one embodiment, horizontal strips correspond to key-frames of filmstrips or video sequences and vertical strips are composed of key-frames from at least one different video having a common feature with a key-frame of the horizontal sequence(s). The vertical key-frames are connected together based on a common feature. For example, in one embodiment the key-frames can be connected because they all contain the same detected and recognized face, or they all correspond to the same scene captured roughly simultaneously but from different viewpoints.

Thus, in such embodiments a single horizontal strip summarizes a single input video while enabling efficient intra-video browsing, as provided by a continuous timeline on the x-axis and a single vertical strip enables efficient inter-video browsing by presenting, to a user, key-frames coming from different videos while depicting certain similarities.

Embodiments of the present principles leverage both width and height of a dedicated space of a presentation space such as a display screen. The interactive representation of the present principles enables efficient intra and inter-video browsing while avoiding visual overload.

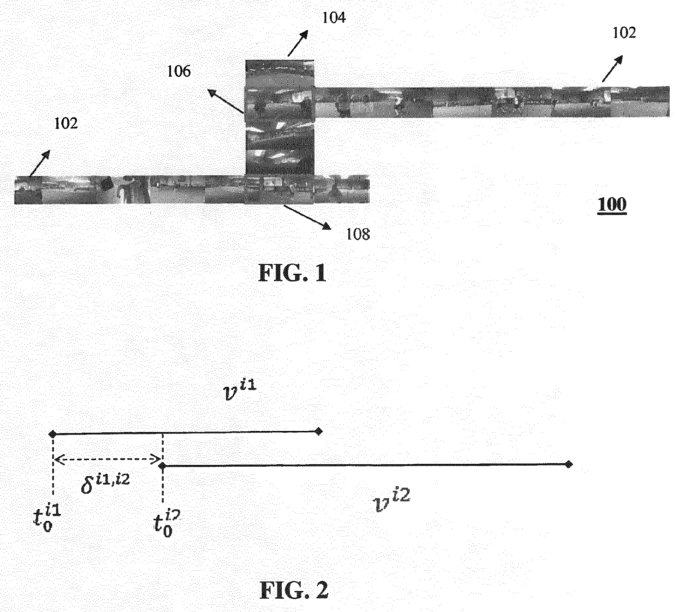

FIG. 1 depicts an exemplary representation of an arrangement 100 of input video sequences arranged in crossed horizontal and vertical strips in accordance with an embodiment of the present principles. In the embodiment of FIG. 1, the horizontal strips 102 correspond to video sequences comprised of key-frames of a single video sequence. The vertical strip 104 of FIG. 1 is composed of key-frames from various different input videos. In accordance with various embodiments of the present principles, the key-frames for the horizontal and vertical strips are connected together/related based on some common features. For example, the horizontal and vertical strips can all contain the same detected and recognized face, or alternatively the key frames for the horizontal and vertical strips can all correspond to the same scene captured roughly at the same time but from different viewpoints, etc. In one embodiment of the present principles, common features are determined by processing programs that create exchange files containing the key frames and determine key-frame connection information. Such files are then used to determine the common features to inter-relate the horizontal and vertical strips of the present principles.

In one embodiment of the present principles, inter-video key-frame connection is based on facial detection/recognition. The idea is to connect $K_{j1}^{i1}$ with $K_{j2}^{i2}$ if in both videos a common face was detected and both faces match.

In an alternate embodiment of the present principles, inter-video key-frame connection is based on image similarity. The idea is to connect $K_{j1}^{i1}$ with $K_{j2}^{i2}$ (defined below) using content-based image retrieval algorithms without assumption on objects that compose the scene. It should be noted that any kind of metadata could be used to establish the inter-video key-frame connections and so to deal with any video collection (e.g. same actor, same action (smoking, swimming, couple kissing...), same place, etc.).

Thus, in embodiments of the present principles, such as in the embodiment of FIG. 1, a single horizontal strip 102 enables efficient intra-video browsing of a single input video along a continuous timeline on, for example, the x-axis while a single vertical strip 104 enables efficient inter-video browsing by presenting to a user key-frames existing in different videos but linked by at least one common feature (as described above). That is, in various embodiments of the present principles an arrangement of the present principles includes at least one horizontal strip having time-sequenced video frames belonging to a single video sequence and at least one vertical strip having a plurality of video frames belonging to different video sequences, each of the plurality of video frames of the at least one vertical strip having at least one feature in common. In such embodiments, the at least one vertical strip is arranged to intersect at a video frame of the at least one horizontal video frame having the least one feature in common with the video frames in the at least one vertical strip (described in further detail below). For example, in FIG. 1, the vertical strip intersects one of the horizontal strips 102 at a first frame 106 and intersects a second of the horizontal strips 102 at a next to last frame 108.

In one embodiment in which *N* input videos constitute an input video set $v = \{v^i\}_{i=1...N}$ and where key-frames are selected with the same uniform temporal subsampling for every input video, where strips are simple key-frames strips and where connections between key-frames from different input videos are based on temporal synchronization, for each input video $v^i = \left\{ I_t^i \right\}$, given a temporal subsampling step $s > 0$, $M^i$ key-frames $\left\{ K_j^i \right\}_{j=0...M^i-1}$ are selected as $K_j^i = I_{j*s}^i$ where $M^i$ directly depends on the frame number of $v^i$. That is, one key frame is taken for every 's' frames, so for any video, the j-th key-frame is the (j*s)-th video frame.

In one embodiment, for constructing the N horizontal strips, it is assumed that all input videos have the same frame width and frame height. If not, conversion to a common format is performed. For each *i*, given the key-frame set $\left\{ K_j^i \right\}$, the horizontal strip image $H^i$ is defined as a simple horizontal image stack, in one embodiment, in accordance with equation one (1) which follows:

$$H^i(x1,y1) = K_j^i(x2,y2) \text{ with } y1 = y2 \text{ and } x1 = x2 + j * \text{frame\_width}, \quad (1)$$

$$\forall x2 \in [0,\text{frame\_width}[, y2 \in [0,\text{frame\_height}[, j \in [0, M^i - 1]$$

where (*x1, y1*) and (*x2, y2*) correspond to pixel locations in the domain of the horizontal strip image $H^i$ (whose width may change for every *i* since $M^i$ may change) and the image domain [0,frame_width[ × [0,frame_height[ respectively.

FIG. 2 depicts an example of a temporal relationship between two input videos in accordance with an embodiment of the present principles. In the embodiment of FIG. 2, each input video $\{v^i\}$ has its own time duration, as well as its own absolute start time and end time. For a given pair of videos ($v^{i1}$, $v^{i2}$) with respective absolute start times $t_0^{i1}$ and $t_0^{i2}$ and a temporal overlap, the time offset $\delta^{i1,i2}$ between the two input videos is related to the absolute start times according to equation two (2) which follows:

$$t_0^{i1} + \delta^{i1,i2} = t_0^{i2}. \qquad (2)$$

To provide proper temporal synchronization between the two input videos, the time offset has to be determined. In various embodiments of the present principles, such synchronization information can be determined using metadata associated with the video files for the input videos if capture devices for the different videos were previously synchronized. Alternatively, such information can also be determined using audio or image feature matching between the two input videos, as discussed by Bagri et al., "A Scalable Framework for Joint Clustering and Synchronizing Multi-Camera Videos", European Signal Processing Conference (EUSIPCO), 2013; and by Elhayek et al., "Feature-Based Multi-video Synchronization with Subframe Accuracy", DAGM 2012 (Deutsche Arbeitsgemeinschaft für Mustererkennung DAGM e.V. - German Association for Pattern Recognition).

In one embodiment of the present principles, a time threshold $u$ is defined such that $0 < u < s/2$ and two key-frames $K_{j1}^{i1}$ and $K_{j2}^{i2}$ from different input videos $v^{i1}$ and $v^{i2}$ are considered. The two frames, $K_{j1}^{i1}$ and $K_{j2}^{i2}$, are considered as "connected" if $|j1*s+\delta^{i1,i2}-j2*s|<u$. That is, the j1-th key-frame of $v^{i1}$ and the j2-th key-frame of $v^{i2}$ are captured at times separated by less than u. Note that with $u < s/2$, one key-frame of a video $v^{i1}$ cannot be connected with more than one key-frame of a video $v^{i2}$.

In accordance with an embodiment of the present principles, for the construction of vertical strips for each key-frame, $K_j^i$, the following set of key-frames $C_j^i = K_j^i \cup \left\{ C_p^{i,j} \right\}_{p=1...P_j^i}$ containing $K_j^i$ itself and the $P_j^i$ key-frames $C_p^{i,j}$ connected with $K_j^i$ is considered. To simplify the notations, $C_j^i = \left\{ C_p^{i,j} \right\}_{p=0...P_j^i}$ is considered. As such, the vertical strip image $V_j^i$ is defined as a simple vertical image stack, in one embodiment, in accordance with equation three (3) which follows:

$$V_j^i(x1,y1) = C_p^{i,j}(x2,y2) \text{ with } x1 = x2 \text{ and } y1 = y2 + p * \text{frame\_height}, \qquad (3)$$

$$\forall x2 \in [0,\text{frame\_width}[, y2 \in [0,\text{frame\_height}[, p \in [0,P_j^i]$$

where $(x1,y1)$ and $(x2,y2)$ correspond to pixel locations in the domain of the vertical strip image $V_j^i$ (whose height may change for every $(i,j)$ since $P_j^i$ may change) and the image domain $[0,\text{frame\_width}[\times[0,\text{frame\_height}[$ respectively.

Equation (3) describes the construction of a vertical strip from bottom to top with a selected key-frame on the lowest row. Of course constructing similarly a vertical strip from top to bottom with selected key-frame on the highest row is straight forward, as well as constructing a vertical strip with selected key-frame on an intermediate row. This means that that there are several options for the vertical arrangement of the key-frames, $C_j^i = \left\{ C_p^{i,j} \right\}_{p=0...P_j^i}$, that compose a vertical strip, among which the two following solutions can be found (1) by increasing video index (key-frame of $v^1$ if any is displayed just above or just under selected key-frame) and (2) by decreasing similarity (the highest similarity to the selected key-frame, the closest to it). It should be noted that the option that would correspond to display key-frames of $v^i$ on the $i^{th}$ row in any case would lead to some holes in vertical strips that do not contain any key-frames of $v^i$.

In one embodiment of the present principles, the vertical arrangement is deduced automatically and in real-time from what is actually displayed on the screen to maintain on a same row the key-frames from a same video. That is, in accordance with an embodiment of the present principles, if an already displayed vertical strip contains a key-frame of video $v^i$ on a certain row and that the user asks for the display of another vertical strip also containing a key-frame of video $v^i$, the arrangement is done so that both key-frames of video $v^i$ appear on the same row. If it is not possible to do so without introducing holes in the required vertical strip, optimization is performed to satisfy the rule requiring maintaining vertical locations for the largest possible number of key-frames of an embodiment of the present principles. For example, in one embodiment of the present principles all configurations can be tested by considering a vertical segment of length of the number of key frames in the second vertical strip, sliding this segment along the y-axis and retaining the position that maximizes the number of rows of this segment containing one key frame of the first vertical strip corresponding to a video for which another key-frame has to be displayed in the second vertical strip

In accordance with embodiments of the present principles, when displaying simultaneously a vertical strip image and a horizontal strip image having a common key-frame, they are crossed at their key-frame in common. For a given pair $(i,j)$ and for p such that $C_p^{i,j} = K_j^i,$

$$H^i(x + j * \text{frame\_width}, y) = V_j^i(x, y + p * \text{frame\_height}),$$

$$\forall x \in [0, \text{frame\_width}[, y \in [0, \text{frame\_height}[$$

That is, at an intersection, pixels of horizontal and vertical strip images have color values in common since they intersect at a common key-frame.

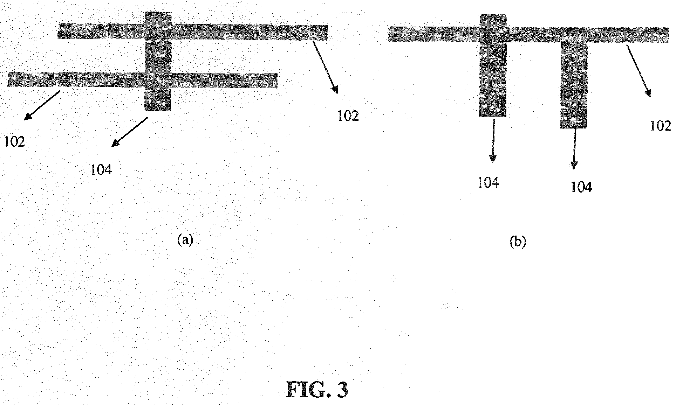

In one embodiment of the present principles, to avoid visual overload during display and collisions or inconsistencies between strips, simultaneous display of two horizontal (or more) and two vertical strips (or more) is prevented. For example, assume that at the initialization, only one first horizontal strip is shown, then that a user requests for the display of a first vertical strip, then requests again for the display of a second horizontal strip. If the user requests again for the display of a second vertical strip during the display of the second horizontal strip, the display of the first horizontal strip will be removed/hidden before the display of the second horizontal strip. For example, FIG. 3a depicts an example of the display of two horizontal strips 102 and one vertical strip 104 for summarizing and browsing video content in accordance with an embodiment of the present principles. Similarly, FIG. 3b depicts an example of the display of two vertical strips (104) and one horizontal strip (102) for summarizing and browsing video content in accordance with an alternate embodiment of the present principles. As described above, in one embodiment of the present principles, to avoid visual overload during display and collisions or inconsistencies between strips, simultaneous display of two (or more) horizontal and two (or more) vertical strips is prevented. Although in the embodiments of FIG. 3a and FIG. 3b the simultaneous display of two (or more) horizontal and two (or more) vertical strips is prevented, in alternate embodiments of the present principles in which display/presentation space is not an issue and as such visual overload during display and collisions or inconsistencies between strips will not occur, the display of two (or more) horizontal and two (or more) vertical strips is enabled.

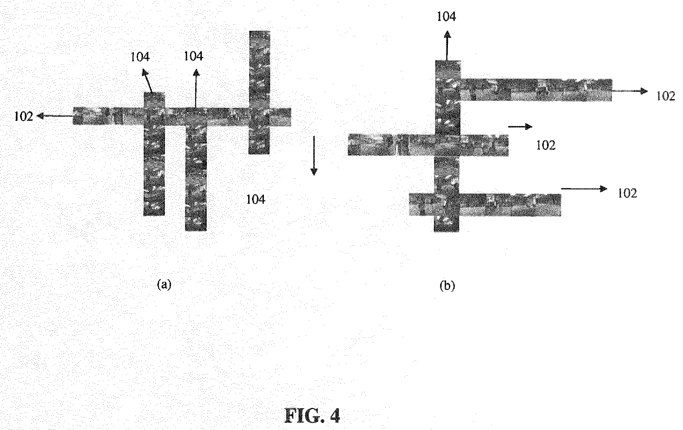

In various embodiments of the present principles, if a single strip exists in either the horizontal or vertical direction, the display of multiple strips in the other direction is possible. For example, FIG. 4a depicts an embodiment of the present principles in which a configuration for summarizing and browsing content includes a single horizontal strip 102 and three vertical strips 104. Similarly, FIG. 4b depicts an embodiment of the present principles in which a configuration for summarizing and browsing content includes a single vertical strip 104 and three horizontal strips 102.

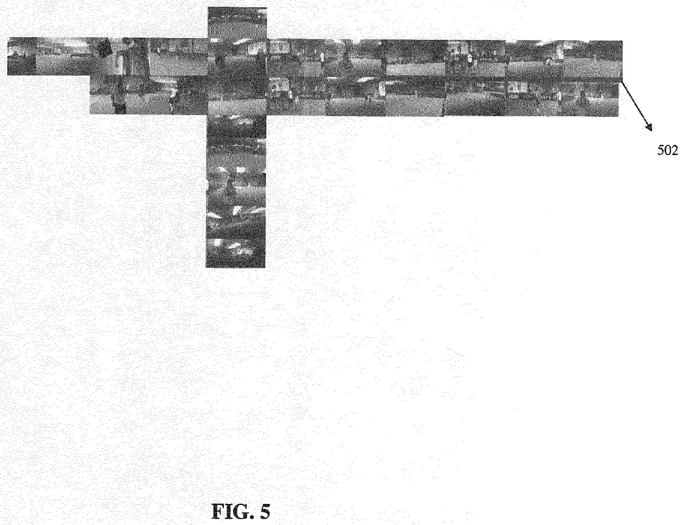

In an embodiment in which key frames in a vertical strip are selected, there can exist frames in horizontal strips that have no feature in common. For example, FIG. 5 depicts an embodiment of the present principles in which a configuration for summarizing and browsing content includes a single vertical strip and two horizontal strips. In the embodiment of FIG. 5, after the key frames for the vertical strip are selected the two horizontal strips are created using key frames of two of the different videos presented in the vertical strip. As depicted in FIG. 5, the horizontal strips are just above one another with no space in between. Such an arrangement can lead to a confusing presentation if the key frames of the two horizontal strips have no feature in common. As such, in accordance with an embodiment of the present principles, borders 502 (e.g., thick borders as depicted in FIG. 5) are displayed between the neighboring key frames of the horizontal strips that have no feature in common as depicted in FIG. 5.

In at least one embodiment of the present principles key-frame selection is based on saliency, activity and/or aesthetic estimation. Frames with a local maximum of saliency or aesthetic score or local minimum of activity are considered. Alternatively, key frame selection can be performed manually by a user.

However, when key-frame selection is not based on uniform temporal subsampling, inter-video key-frame connection, if still based on synchronization, must be adapted. That is, in such embodiments, one key-frame is connected to the closest key-frame of each other video if their temporal distance does not exceed a given threshold.

In at least one embodiment of the present principles, the key frames described above can comprise videos as well as still pictures. As such, vertical strip images can contain still pictures that have been connected to the considered video key-frame(s) of a horizontal strip and vice versa.

In addition, in accordance with various embodiments of the present principles, to enable a user to quickly recall frames of interest previously watched, video indices and key-frame indices or other such references to previously used key-frames are stored in a memory/queue. In such embodiments, corresponding thumbnails can be displayed in a dedicated display space. As such, when a thumbnail is selected, the associated horizontal and vertical strips are displayed.

In various embodiments of the present principles, a computer readable medium (e.g., memory, storage device, removable media, and so on) is provided with stored program instructions, which, when executed by a processor, will cause a method to be implemented, such as described above according to one or more embodiments of the present principles.

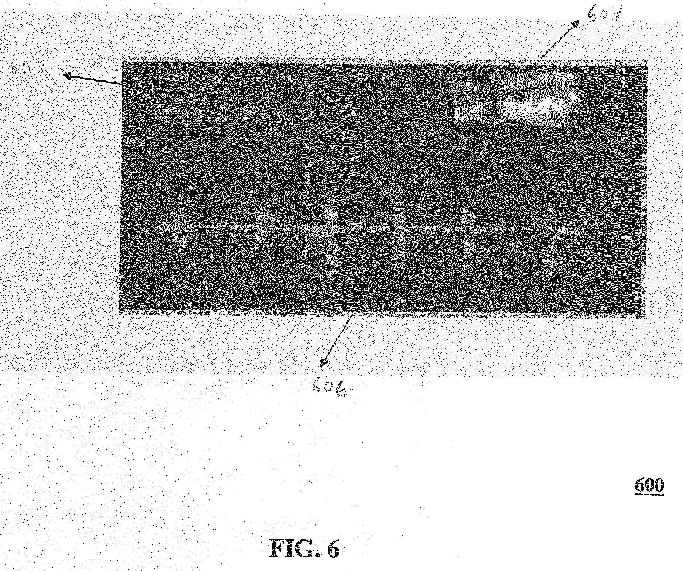

FIG. 6 depicts an example of a user interface 600 in accordance with an embodiment of the present principles. That is, an embodiment of the present principles includes a user interface 600 including various commands for selecting video frames for browsing. The user interface 600 of FIG. 6 illustratively includes two top sections (602, 604) and a single lower section (606). In the embodiment of FIG. 6 the top left section (602) depicts bar graph representations of a number of input videos to a device, such as a video editor of the present principles. The number of bars corresponds to the number of videos, the length of a bar depicts the time duration of the corresponding video, and the horizontal alignment depicts the absolute start time of the corresponding video. The top left section (602) also provides a toggle button to enable a user to select at least one of the input videos depicted as horizontal bars and display the at least one associated horizontal strip in the lower section (606). In FIG. 6, the selected input video is depicted as the highlighted horizontal bar in the top left section (602). As also depicted in the embodiment of FIG. 6, the top left section (602) of the user interface 600 includes a vertical timeline bar which a user can use, by for example touching, clicking, sliding, to select a region of a horizontal strip, for example, the selected horizontal strip, to select a corresponding key-frame of the considered summarized video and display in the lower section (606) the associated vertical strip that shows other key-frames all coming from different videos but all connected to the selected key-frame based on certain established relationships as described above.

The top right section (604) of the user interface 600 of FIG. 6 illustratively depicts a representation of the selected key frame of the selected input video.

In the single lower section (606) of the user interface 600 of FIG. 6, a horizontal representation of the key frames of the selected horizontal video and vertical representations of the corresponding key frames of the other videos is depicted in accordance with an embodiment of the present principles.

In the lower section (606) of the user interface 600 of the embodiment of FIG. 6, a user can touch/click/slide horizontally one finger on any region of a vertical strip (not shown) to select the corresponding key-frame and display the horizontal strip that summarizes the video to which the selected key-frame belongs. In addition, a user can drag the horizontal strip left or right to show previous or future instances or frames if a strip is longer than a screen and similarly drag a vertical strip top or bottom to show other key-frames if a strip is higher than the screen. Similarly, a user can touch/click/slide vertically one finger on any region of a horizontal strip (not shown) to select the corresponding key-frame and display the vertical strip that shows other key-frames all coming from different videos but all connected to the selected key-frame based on certain established relationships as described above.

The user interface 600 of the present principles further enables a user to double touch or click on any region of a horizontal or vertical strip shown in the lower section (606) to play the corresponding video from the corresponding instant in the top right section (604), or in a separate window, or a second screen.

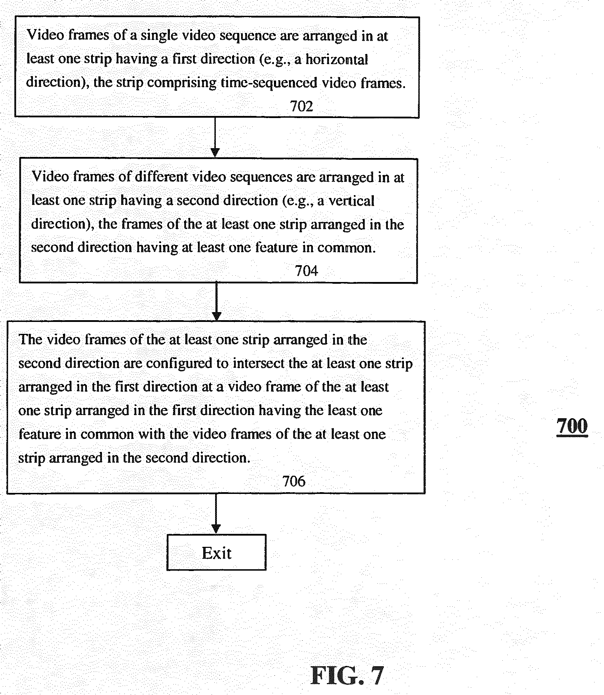

FIG. 7 depicts a flow diagram of a method 700 for summarizing and browsing content in accordance with an embodiment of the present principles. The method 700 begins at step 702 during which video frames of a single video sequence are arranged in at least one strip having a first direction (e.g., a horizontal direction), the strip comprising time-sequenced video frames. The method 700 can then proceed to step 704.

At step 704, video frames of different video sequences are arranged in at least one strip having a second direction (e.g., a vertical direction), the frames of the at least one strip arranged in the second direction having at least one feature in common. The method 700 can then proceed to step 706.

At step 706, the video frames of the at least one strip arranged in the second direction are configured to intersect the at least one strip arranged in the first direction at a video frame of the at least one strip arranged in the first direction having the least one feature in common with the video frames of the at least one strip arranged in the second direction. The method 700 can then be exited.

Optionally, in one embodiment of the present principles, only one strip is arranged in the first direction if there is more than one strip arranged in the second direction, and only one strip is arranged in the second direction if there is more than one strip arranged in the first direction. An arrangement of the present principles can be limited as such to prevent visual confusion when displaying an arrangement of the present principles.

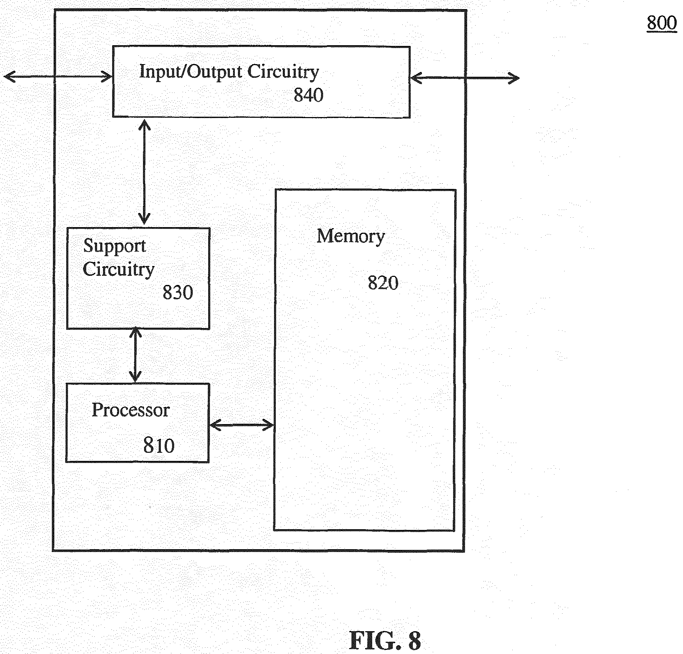

FIG. 8 depicts a high level block diagram of an apparatus 800 for implementing the features of the present principles in accordance with an embodiment of the present principles. The apparatus 800 of FIG. 8 can comprise a device, such as a video editor, in various embodiments of the present principles. The apparatus 800 of FIG. 8 comprises a processor 810 as well as a memory 820 for storing control programs, instructions, software, video content, video sequences, data and the like. The processor 810 cooperates with conventional support circuitry 830 such as power supplies, clock circuits, cache memory and the like as well as circuits that assist in executing the software routines stored in the memory 820. As such, it is contemplated that some of the process steps discussed herein as software processes may be implemented within hardware, for example, as circuitry that cooperates with the processor 810 to perform various steps. The apparatus 800 of FIG. 8 also includes input-output circuitry 840 that forms an interface between the various respective functional elements communicating with the renderer.

Although the apparatus 800 of FIG. 8 is depicted as a general purpose computer that is programmed to perform various control functions in accordance with the present principles, the invention can be implemented in hardware, for example, as an application specified integrated circuit (ASIC). As such, the process steps described herein are intended to be broadly interpreted as being equivalently performed by software, hardware, or a combination thereof.

While the foregoing is directed to various embodiments of the present principles, other embodiments of the invention may be devised without departing from the basic scope thereof. For example, one or more features described in the examples above can be modified, omitted and/or used in different combinations. Thus, the appropriate scope of the invention is to be determined according to the claims that follow.

**Claims**

1. A video arrangement (100) for presentation of a plurality of video sequences for viewing, comprising:

   at least one horizontal strip (102) having time-sequenced video frames belonging to a single video sequence; and
   at least one vertical strip (104) having a plurality of video frames belonging to different video sequences, each of the plurality of video frames of the at least one vertical strip having at least one feature in common;
   wherein the at least one horizontal strip (102) and the at least one vertical strip (104) are configured to intersect at a video frame (106, 108) of the at least one horizontal strip (102) having the at least one feature in common with the video frames in the at least one vertical strip (104).

2. The arrangement of claim 1, wherein only one vertical strip (104) is present if there is more than one horizontal strip (102), and only one horizontal strip (102) is present if there is more than one vertical strip (104).

3. The arrangement of claim 1, wherein the at least one feature in common comprises at least one of a common face, image similarity and a time of capture of video frames.

4. The arrangement of claim 1, wherein all video sequences are temporally synchronized.

5. A method (700) for arranging video sequences for summarizing and browsing, comprising:

   arranging (702) video frames of a single video sequence in at least one strip having a first direction (102), the at least one strip arranged in the first direction having time-sequenced video frames;
   arranging (704) video frames of different video sequences in at least one strip having a second direction (104), the frames of the at least one strip arranged in the second direction (104) having at least one feature in common; and
   configuring (706) the video frames of the at least one strip arranged in the second direction (104) to intersect the at least one strip arranged in the first direction (102) at a video frame (106, 108) of the at least one strip arranged in the first direction (102) having the least one feature in common with the video frames of the at least one strip arranged in the second direction (104).

6. The method of claim 5, wherein the first direction comprises a horizontal direction (102) and the second direction comprises a vertical direction (104).

7. The method of claim 5, comprising converting the video sequences to a common format such that all video sequences have the same frame width and frame height.

8. The method of claim 5, comprising temporally synchronizing all video sequences.

9. The method of claim 8, wherein video sequences are temporally synchronized using at least one of metadata associated with the video sequences and at least one of audio and video image feature matching.

10. The method of claim 5, wherein the at least one feature in common comprises at least one of a common face, image similarity and a time of capture of video frames.

**11.** An apparatus (800) for arranging video sequences for summarizing and browsing comprising:

a memory (820) for storing at least control programs, instructions, software, video content, video sequences and data; and
a processor (810) for executing the control programs and instructions, said processor when executing said control programs configuring said apparatus (800) to:

arrange (702) video frames of a single video sequence in at least one strip having a first direction (102), the at least one strip arranged in the first direction having time-sequenced video frames;
arrange (704) video frames of different video sequences in at least one strip having a second direction (104), the frames of the at least one strip arranged in the second direction (104) having at least one feature in common; and
configure (706) the video frames of the at least one strip arranged in the second direction (104) to intersect the at least one strip arranged in the first direction (102) at a video frame (106, 108) of the at least one strip arranged in the first direction (102) having the least one feature in common with the video frames of the at least one strip arranged in the second direction (102).

**12.** The apparatus of claim 11, wherein said apparatus (800) comprises a video editor.

**13.** A machine-readable medium having one or more executable instructions stored thereon, which when executed by a digital processing system causes the digital processing system to perform a method (700) for arranging video sequences for summarizing and browsing, the method comprising
arranging (702) video frames of a single video sequence in at least one strip having a first direction (102), the at least one strip arranged in the first direction having time-sequenced video frames;
arranging (704) video frames of different video sequences in at least one strip having a second direction (104), the frames of the at least one strip arranged in the second direction (104) having at least one feature in common; and
configuring (706) the video frames of the at least one strip arranged in the second direction (104) to intersect the at least one strip arranged in the first direction (102) at a video frame (106, 108) of the at least one strip arranged in the first direction (102) having the least one feature in common with the video frames of the at least one strip arranged in the second direction (104).

**14.** A user interface (600) for arranging video sequences for summarizing and browsing comprising:

a first section (606) including:

at least one horizontal strip (102) having time-sequenced video frames belonging to a single video sequence; and
at least one vertical strip (104) having a plurality of video frames belonging to different video sequences, each of the plurality of video frames of the at least one vertical strip (104) having at least one feature in common;
wherein the at least one horizontal strip (102) and the at least one vertical strip (104) are configured to intersect at a video frame (106, 108) of the at least one horizontal strip (102) having the at least one feature in common with the video frames in the at least one vertical strip (104);

a second section (602) including bar graph representations of the horizontal and vertical video sequences; and
a third section (604) depicting a representation of a selected key frame of the horizontal strip (102) and for playing video sequences.

**15.** The user interface (600) of claim 16, wherein a user can execute at least one of a click, a touch, a drag and a slide on a region of a horizontal strip (102) or a vertical strip (104) in the first section (606) to browse the video sequences.

**16.** The user interface (600) of claim 14, wherein a user can execute at least one of a click, a touch, a drag and a slide on a region of the bar graph representations to select a horizontal strip (102) or a vertical strip (104) to be displayed.

104

106

102

102

108

**FIG. 1**

100

$v^{i1}$

$\delta^{i1,i2}$

$v^{i2}$

$t_0^{i1}$

$t_0^{i2}$

**FIG. 2**

(a)

(b)

**FIG. 3**

(a)                                        (b)

# FIG. 4

502

FIG. 5

FIG. 6

Video frames of a single video sequence are arranged in at least one strip having a first direction (e.g., a horizontal direction), the strip comprising time-sequenced video frames.
702

Video frames of different video sequences are arranged in at least one strip having a second direction (e.g., a vertical direction), the frames of the at least one strip arranged in the second direction having at least one feature in common.
704

The video frames of the at least one strip arranged in the second direction are configured to intersect the at least one strip arranged in the first direction at a video frame of the at least one strip arranged in the first direction having the least one feature in common with the video frames of the at least one strip arranged in the second direction.
706

Exit

700

# FIG. 7

**FIG. 8**

Europäisches
Patentamt

European
Patent Office

Office européen
des brevets

## EUROPEAN SEARCH REPORT

**Application Number**

EP 15 30 7079

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WORRING M ET AL: "The Mediamill Semantic Video Search Engine", 2007 IEEE INTERNATIONAL CONFERENCE ON ACOUSTICS, SPEECH, AND SIGNAL PROCESSING 15-20 APRIL 2007 HONOLULU, HI, USA, IEEE, PISCATAWAY, NJ, USA, 15 April 2007 (2007-04-15), pages IV-1213, XP031464074, ISBN: 978-1-4244-0727-9 * Section 5.4.3 and Figure 10 * ----- | 1-16 | INV. G06F17/30 |
| A | EP 2 447 946 A2 (SONY CORP [JP]) 2 May 2012 (2012-05-02) * paragraphs [0039] - [0071] * ----- | 1-16 | |
| A | US 2012/293687 A1 (KARN KEITH STOLL [US] ET AL) 22 November 2012 (2012-11-22) * paragraphs [0083] - [0086] * ----- | 1-16 | |
| A | US 2002/056095 A1 (UEHARA YUSUKE [JP] ET AL) 9 May 2002 (2002-05-09) * paragraphs [0011] - [0019] * ----- | 1-16 | TECHNICAL FIELDS SEARCHED (IPC) G06F |

The present search report has been drawn up for all claims

| Place of search | Date of completion of the search | Examiner |
|---|---|---|
| The Hague | 31 May 2016 | Targon, Valerio |

EPO FORM 1503 03.82 (P04C01)

## ANNEX TO THE EUROPEAN SEARCH REPORT
## ON EUROPEAN PATENT APPLICATION NO.

EP 15 30 7079

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2016

| Patent document cited in search report | | | Publication date | Patent family member(s) | | | Publication date |
|---|---|---|---|---|---|---|---|
| EP 2447946 | A2 | | 02-05-2012 | CN | 102456379 | A | 16-05-2012 |
| | | | | EP | 2447946 | A2 | 02-05-2012 |
| | | | | JP | 5678576 | B2 | 04-03-2015 |
| | | | | JP | 2012095118 | A | 17-05-2012 |
| | | | | US | 2012110509 | A1 | 03-05-2012 |
| US 2012293687 | A1 | | 22-11-2012 | CN | 103535023 | A | 22-01-2014 |
| | | | | EP | 2710795 | A1 | 26-03-2014 |
| | | | | JP | 5877895 | B2 | 08-03-2016 |
| | | | | JP | 2014520424 | A | 21-08-2014 |
| | | | | KR | 20140010989 | A | 27-01-2014 |
| | | | | US | 2012293687 | A1 | 22-11-2012 |
| | | | | US | 2014105500 | A1 | 17-04-2014 |
| | | | | WO | 2012158588 | A1 | 22-11-2012 |
| US 2002056095 | A1 | | 09-05-2002 | JP | 4587416 | B2 | 24-11-2010 |
| | | | | JP | 2001309269 | A | 02-11-2001 |
| | | | | US | 2002056095 | A1 | 09-05-2002 |

EPO FORM P0459

For more details about this annex : see Official Journal of the European Patent Office, No. 12/82